# EUROPÄISCHE PATENTSCHRIFT

(11) **EP 0 727 247 B1**
(45) Veröffentlichungstag und Bekanntmachung des Hinweises auf die Patenterteilung: **09.06.1999**
(21) Anmeldenummer: 96101973.4
(22) Anmeldetag: 12.02.1996
(51) Int. Cl.: B01D 47/12

(54) **Verfahren zum Reinigen von Gasen mit Wasser**
Process for purifying gases with water
Procédé de purification des gaz avec de l'eau

(30) Priorität: 16.02.1995 DE 19505231
(43) Veröffentlichungstag der Anmeldung: 21.08.1996
(73) Patentinhaber: Metallgesellschaft Aktiengesellschaft, 60325 Frankfurt am Main (DE)
(72) Erfinder: Neumann, Ulrich, Dr., D-67663 Kaiserslautern (DE); Willing, Wolfgang, Dr., D-61206 Wöllstadt (DE)

(56) Entgegenhaltungen:
- DE-A- 2 450 719
- DE-A- 4 113 108
- FR-A- 1 594 760
- US-A- 3 957 464

## Beschreibung

Die Erfindung betrifft ein Verfahren zum Entfernen von Staub und Aerosolen aus einem Abgas, welches man in mindestens zwei Waschstufen mit einer vor allem aus Wasser bestehenden Waschflüssigkeit in Kontakt bringt, wobei man in der vorletzten Waschstufe das Abgas mit einer im Kreislauf geführten wäßrigen Salzlösung in Kontakt bringt, welche durch das Abgas herangeführte Stoffe enthält, das Abgas mit Temperaturen im Bereich von 30 bis 150°C in der vorletzten Waschstufe durch eine Waschzone leitet, welcher man im Kreislauf geführte wäßrige Salzlösung in einer Menge von 0,1 bis 10 l pro Nm³ Abgas, welches durch die Waschzone strömt, zuführt, und das aus der Waschzone kommende Abgas mit einer Temperatur von 30 bis 80°C, welches zu 90 bis 100 % mit Wasserdampf gesättigt ist und höchstens 50 Gew.-% des Staubgehaltes aufweist, den das Abgas beim Eintritt in die vorletzte Waschstufe hat, in die letzte Waschstufe leitet, wo das Abgas durch eine gasdurchlässige, Turbulenz erzeugende Schicht geführt und wo das Abgas mit Frischwasser und/oder einer Frischwasser enthaltenden Waschflüssigkeit in Kontakt gebracht wird.

Ein solches Verfahren ist aus US-A-3 957 464 bekannt, hierbei strömt das Abgas in der letzten Waschstufe horizontal.

Der Erfindung liegt die Aufgabe zugrunde, beim Arbeiten mit mindestens zwei Waschstufen einen hohen Reinigungsgrad zu erreichen und nicht nur Staub und Aerosole, sondern auch gasförmige Bestandteile, insbesondere HCl und HF, möglichst gut aus dem Abgas abscheiden zu können. Gleichzeitig soll die Menge an anfallendem Abwasser minimiert werden.

Beim eingangs genannten Verfahren wird die Aufgabe erfindungsgemäß dadurch gelöst, daß das Abgas in der letzten Waschstufe aufwärts durch die gasdurchlässige Schicht zu einem Auslaß strömt, wobei das Abgas unterhalb der gasdurchlässigen Schicht mit Frischwasser enthaltender, nebelartig fein zerteilter Waschflüssigkeit besprüht und dabei mit Wasserdampf mindestens gesättigt wird, bevor es in die gasdurchlässige Schicht eintritt, und daß man in der letzten Waschstufe pro Nm³ Abgas 0,05 bis 2 l Waschflüssigkeit in das Abgas hinein versprüht.

Beim zu reinigenden Abgas kann es sich z. B. um ein Rauchgas aus der Verbrennung fossiler Brennstoffe oder ihrer Verarbeitungsrückstände oder aber um ein Abgas aus einer Chemieanlage handeln. Werte der Wasserdampf-Sättigung werden hier stets bezogen auf die Sättigung des Abgases mit reinem Wasser.

Beim Verfahren der Erfindung wird das Abgas in der vorletzten Waschstufe intensiv mit der im Kreislauf geführten wäßrigen Salzlösung behandelt, wobei die Reinigungswirkung dieser Salzlösung gut genutzt wird. Der Salzgehalt dieser Lösung ist ziemlich hoch und kann bis etwa 20 Gew.-% betragen. Dadurch fällt nur wenig Abwasser an. Die Waschzone der vorletzten und/oder der letzten Waschstufe kann eine Füllkörperschicht aufweisen, durch die das Abgas geleitet wird, doch ist dies nicht in allen Fällen notwendig. Durch mindestens eine Füllkörperschicht wird die Sättigung des Abgases mit Wasserdampf verbessert, was eine verbesserte Reinigungsleistung zur Folge hat.

Die letzte Waschstufe, die auch als Reinreinigungsstufe bezeichnet werden kann, dient vor allem dazu, nicht nur Staub und Aerosole aus dem Abgas auszuwaschen, sondern auch Reste der gasförmigen Bestandteile HCl und HF sowie insbesondere SO₃-Aerosole zu entfernen. Das SO₃ bildet teilweise schon in der vorletzten Waschstufe Schwefelsäure-Aerosol, welches sich nicht auf einfache Weise abscheiden läßt. Ebenso ist die Abscheidung von Feinstaubpartikeln mit Korngrößon unter 3 µm und insbesondere unter 1 µm bekanntermaßen schwierig. Um hier zu guten Ergebnissen zu gelangen, wird hierfür gesorgt, daß das Abgas mit relativ niedriger Temperatur im Bereich von 30 bis 80°C und vorzugsweise höchstens 70°C in die letzte Waschstufe eintritt und dabei mit Wasserdampf weitgehend gesättigt ist. Gleichzeitig wird bereits in der vorletzten Waschstufe für die zu entfernenden Stoffe eine hohe Reinigungsleistung erbracht, wodurch die letzte Waschstufe entlastet ist. Auch wenn die Zahl der Waschstufen nicht begrenzt ist, wird man aus Kostengründen bemüht sein, mit zwei oder höchstens drei Waschstufen auszukommen.

Es ist zweckmäßig, die in der letzten Waschstufe anfallende, gebrauchte Waschflüssigkeit in einen Vorratsbehälter innerhalb oder außerhalb der Waschstufe zu leiten, dem Vorratsbehälter Frischwasser zuzuführen und Waschflüssigkeit aus dem Vorratsbehälter in die letzte Waschstufe hinein zu versprühen. Zusätzlich wird ein Teilstrom der Flüssigkeit in die vorletzte Waschstufe geleitet. Auf diese Weise kann der Salzgehalt der der letzten Waschstufe zugeführten Waschflüssigkeit leicht geregelt werden. Es werden in der letzten Waschstufe pro Nm³ Abgas 0,05 bis 2 Liter Waschflüssigkeit in das Abgas hinein versprüht. Es kann zweckmäßig sein, die Waschflüssigkeit vor dem Versprühen anzuwärmen, z.B. um 1 bis 10°C, um die Wasserdampf-Sättigung in der letzten Waschstufe zu erhöhen und um möglichst Übersättigung zu erreichen. Das zu verwendende Frischwasser sollte möglichst erdalkalifrei und salzarm sein, so daß es eine elektrische Leitfähigkeit von höchstens 100 µS/cm hat.

Es kann zweckmäßig sein, das Abgas vor dem Eintritt in die Waschzone in einer Sprühzone mit der im Kreislauf geführten wäßrigen Salzlösung in Kontakt zu bringen und es dadurch sowohl mit Wasserdampf anzureichern als auch zu kühlen. Durch diese Maßnahme wird die Reinigungswirkung der Waschzone unterstützt. Die in der vorletzten Waschstufe umlaufende Salzlösung besteht üblicherweise aus Wasser und den aus dem Abgas aufgenommenen Stoffen. Der pH-Wert der im Kreislauf geführten Salzlösung liegt üblicherweise unterhalb von 5 und vorzugsweise bei höchstens 3. Bei Bedarf können Chemikalien zur pH-Wert-Einstellung zugegeben werden.

Wenn das Abgas zu heiß angeliefert wird, kann man es vor den Waschstufen durch einen indirekten Wärmeaustauscher leiten, gebildetes Kondensat abziehen und es zunächst in die Sprühzone der vorletzten Waschstufe führen.

Für das erfindungsgemäße Verfahren ist es im allgemeinen ausreichend, mit zwei Waschstufen zu arbeiten. Hierbei tritt das Abgas zunächst in die vorletzte Waschstufe ein, die nachfolgend auch als erste Waschstufe bezeichnet wird. Die Feinreinigung des Abgases erfolgt dann in der zweiten Waschstufe, bei der es sich um die letzte Waschstufe handelt, aus welcher man das behandelte Abgas abzieht. Das Abgas kann anschließend z.B. einer an sich bekannten Entschwefelungseinrichtung zur Entfernung von SO₂ zugeführt werden.

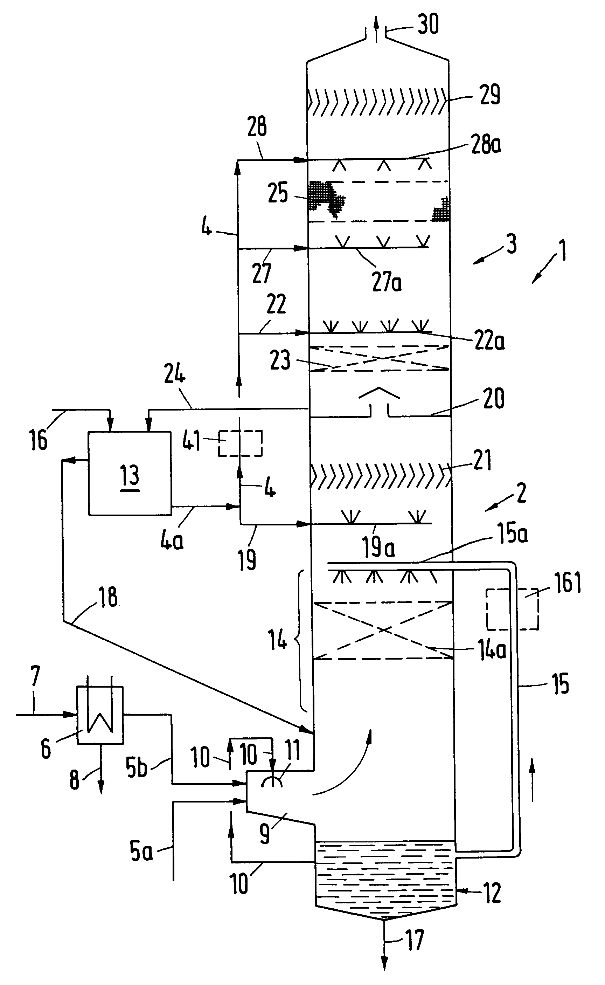

Ausgestaltungsmöglichkeiten des Verfahrens werden mit Hilfe der Zeichnung erläutert.

Die Zeichnung zeigt in schematischer Darstellung einen Waschturm (1) mit zwei Waschstufen (2) und (3). Der besseren Übersichtlichkeit wegen wurden Pumpen in den Leitungen weggelassen.

Das zu reinigende Abgas wird in der Leitung (5a) herangeführt oder kommt alternativ aus der Leitung (5b). Der Leitung (5b) ist ein indirekter Wärmeaustauscher (6) vorgeschaltet, dem man durch die Leitung (7) heißes Abgas, z.B. Rauchgas, zuführt. Im Wärmeaustauscher (6) erfolgt eine Kühlung auf Temperaturen im Bereich von 80 bis 180°C, wobei Kondensat entstehen kann, welches man in der Leitung (8) abzieht. Üblicherweise liegen die Temperaturen in der Leitung (5a) im Bereich von 100 bis 250°C oder in Einzelfällen noch höher.

Zunächst leitet man das zu behandelnde Abgas durch eine Sprühzone (9), wobei es mit Salzlösung besprüht wird, die aus der Leitung (10) kommt und über eine oder mehrere Düsen (11) austritt. Bei der Salzlösung handelt es sich um gebrauchte Waschflüssigkeit, die im Sumpf (12) des Waschturms (1) gesammelt wird. In der Sprühzone (9) wird das Rohgas vor allem mit Wasserdampf angereichert und dabei auch so weit gekühlt, daß es in der ersten Waschstufe (2) beim Aufwärtsströmen mit 40 bis 80°C in die Waschzone (14) eintritt. Salzlösung aus dem Sumpf (12) wird durch die Leitung (15) mittels einer nicht dargestellten Pumpe zur Verteilerleitung (15a) geführt und von hier in die Waschzone (14) hinein versprüht. Die Waschzone (14) kann eine gestrichelt angedeutete flüssigkeitsdurchlässige Füllkörperschicht (14a) oder einen oder mehrere Böden enthalten, doch ist dies nicht unbedingt erforderlich. In diesem Fall rieselt die Salzlösung durch die Füllkörperschicht abwärts, wobei ein intensiver direkter Kontakt mit dem aufwärts strömenden Rauchgas erreicht wird. Mit oder ohne Füllkörperschicht werden in der Waschzone (14) Staub, gasförmige Bestandteile, insbesondere HCl und HF, sowie ein Teil der Aerosole, insbesondere Schwefelsäure-Aerosol, von der Salzlösung aufgenommen. Schwefelsäure-Aerosol entsteht im indirekten Wärmeaustauscher (6), in der Sprühzone (9) und in der Waschzone (14).

Die Salzlösung fließt nach unten in den Sumpf (12) ab und wird größtenteils durch die Leitung (15) im Kreislauf zurückgeführt. Die Leitung (15) kann zusätzlich mit einem gestrichelt angedeuteten Kühler (161) versehen sein, in welchem die Salzlösung indirekt gekühlt wird. Ein Teil der feststoffhaltigen Salzlösung wird durch die Leitung (17) aus dem Waschturm entfernt, wobei man dafür sorgt, daß die abgezogene Flüssigkeitsmenge möglichst klein ist. Das Abwasser der Leitung (17) wird einer nicht dargestellten Aufbereitungsanlage zugeführt. Um die in der ersten Waschzone (2) vorhandene Flüssigkeitsmenge etwa konstant zu halten, kann man an einer beliebigen Stelle Frischwasser zugeben oder aber, wie in der Zeichnung dargestellt, durch die Leitung (18) oder (19) Frischwasser enthaltende Flüssigkeit zuführen.

Die durch den Verteiler (15a) in die Waschzone (14) geleitete Flüssigkeitsmenge liegt im Bereich von 0,1 bis 10 l/Nm³ Abgas, welches durch die Waschzone (14) strömt. Die pro Zeiteinheit durch die Leitung (15) geförderte Flüssigkeitsmenge ist üblicherweise etwa 10mal größer als die durch die Leitung (10) strömende Flüssigkeitsmenge.

Bevor das Abgas die erste Waschstufe (2) verläßt und durch den gasdurchlässigen, flüssigkeitsdichten Boden (20) in die letzte Waschstufe (3) eintritt, strömt das Abgas noch durch einen Tropfenabscheider (21). Der Tropfenabscheider (21) sorgt dafür, daß Verunreinigungen enthaltende Flüssigkeit aus dem Abgas weitgehend abgetrennt wird. Eine Verfahrensvariante besteht darin, Frischwasser oder aber salzarme Waschflüssigkeit aus der Leitung (19) durch den Verteiler (19a) unterhalb des Tropfenabscheiders (21) in das Abgas einzusprühen. Dadurch wird die Sättigung des Abgases mit Wasserdampf in vorteilhafter Weise erhöht, gleichzeitig werden Feststoff-Ablagerungen im Abscheider (21) abgewaschen.

Das durch den Boden (20) aufwärts strömende Abgas weist eine Temperatur im Bereich von 30 bis 80°C auf und es ist zu 90 bis 100 % mit Wasserdampf gesättigt. Gleichzeitig beträgt sein Staubgehalt nur noch höchstens 50 Gew.-% des Staubgehaltes, den das von der Sprühzone (9) kommende Abgas beim Eintritt in die Waschzone (14) aufweist.

In der zweiten und gleichzeitig letzten Waschstufe (3) wird das aufwärts strömende Abgas zunächst intensiv mit Frischwasser enthaltender Waschflüssigkeit durchsetzt, welche aus dem Verteiler (22a) austritt. Die Waschflüssigkeit wird durch die Leitung (22) zugespeist, welche von der Verteilerleitung (4) abzweigt. Die Waschflüssigkeit kommt aus dem Vorratsbehälter (13) und der Verbindungsleitung (4a). Gebrauchte Waschflüssigkeit, die sich auf dem Boden (20) sammelt, wird in der Leitung (24) zum Vorratsbehälter (13) geführt, der auch eine Frischwasser-Zuleitung (16) besitzt. Wie bereits beschrieben, kann man einen Teil der Flüssigkeit des Behälters (13) durch die Leitung (18) dem Flüssigkeitsvorrat im Sumpf (12) zuführen. Damit läßt sich der Feststoff- und Salzgehalt in der Flüssigkeit der Verteilerleitung (4) niedrig halten und die Reinigungsleistung verbessern.

Es kann zweckmäßig sein, die Waschflüssigkeit in der Leitung (4) durch einen gestrichelt eingezeichneten Wärmeaustauscher (41) zu führen, um sie anzuwärmen. Bereits eine Erwärmung um 1 bis 10°C verbessert die Wasserdampf-Sättigung in der letzten Waschstufe (3) spürbar und kann die erwünschte Übersättigung herbeiführen.

Durch den Verteiler (22a) wird die Flüssigkeit durch Düsen aufwärts gerichtet nebelartig fein versprüht in das ebenfalls aufwärts strömende Abgas eingetragen. In bekannter Weise können die Düsen des Verteilers (22a) so ausgebildet sein, daß man neben der Flüssigkeit zusätzlich Luft oder Wasserdampf mit hohem Druck austreten läßt, um eine nebelähnliche Flüssigkeitsverteilung zu erreichen.

Es kann zweckmäßig sein, das in die letzte Waschstufe (3) eintretende, Wasserdampf mit sich führende Abgas zunächst durch eine Füllkörperschicht (23) zu leiten. Möglicherweise verbessert sich dadurch die Verteilung des Wasserdampfs im Abgas und die Sättigung des Abgases mit Wasserdampf. Insbesondere dann, wenn man auf die Füllkörperschicht (14a) verzichtet, wird sich die Füllkörperschicht (23) empfehlen, doch können auch beide Schichten Anwendung finden.

Mit Wasserdampf praktisch gesättigt tritt das Abgas von unten in eine gasdurchlässige, Turbulenz erzeugende Schicht (25) ein. Diese Schicht (25) kann in verschiedener Weise ausgestaltet sein, es kann sich z.B. um eine Füllkörperschicht oder Gestrickpackung handeln, auch sind hier gasdurchlässige Böden möglich. Die Schicht (25) dient der Agglomeration von Nebelteilchen und Aerosolen und gleichzeitig deren Abscheidung. In der Schicht (25) gebildete Flüssigkeitstropfen fallen nach unten und sammeln sich auf dem Boden (20), wo sie durch die Leitung (24) abgezogen werden.

Als Verfahrensalternative kann es zweckmäßig sein, Waschflüssigkeit aus der Leitung (4) durch die Leitung (27) heranzuführen und über den angeschlossenen Verteiler (27a) zusätzlich zu versprühen oder auch Waschflüssigkeit durch die Leitung (28) einem über der Schicht (25) angeordneten Verteiler (28a) zuzuführen und von dort auf die Schicht (25) zu versprühen. Abweichend von der Zeichnung kann man durch die Leitungen (28) und (27) auch Frischwasser dem jeweiligen Verteiler zuführen.

Das aufwärts strömende, von der Agglomerationsschicht (25) kommende Rauchgas wird zweckmäßigerweise noch durch einen Tropfenabscheider (29) geführt, in welchem die restliche Abscheidung von agglomerierten Nebelteilchen und Aerosolen erfolgt, bevor es den Waschturm (1) durch den Auslaß (30) verläßt. Das den Waschturm (1) verlassende Gas kann einer nicht dargestellten Entschwefelungseinrichtung zugeführt werden, die vor allem dazu dienen wird, SO₂ zu entfernen. Eine Möglichkeit besteht darin, den Auslaß (30) mit dem Wärmeaustauscher (6) zu verbinden und das relativ kalte Gas als Kühlmedium im indirekten Wärmeaustauscher (6) zu verwenden.

### Beispiel

Einem Waschturm (1), wie in der Zeichnung dargestellt, mit zwei Waschzonen (2) und (3) und mit einer Füllkörperschicht (14a) in der Waschzone (14) werden pro Stunde 950 Nm³ Rauchgas aus der Verbrennung von Schweröl durch die Leitung (5a) zugeführt. Der Vorratsbehälter (13) befindet sich abweichend von der Zeichnung auf dem Boden (20), es fehlen die Leitungen (19), (27) und (28) mit den Verteilern (19a), (27a) und (28a), sowie der Kühler (161). Das Rauchgas der Leitung (5a) enthält 8,5 Vol.-% Wasserdampf und 5,8 Vol.-% O₂, es tritt mit 175°C und einem Druck von 1045 mbar in die Sprühzone (9) ein.

Die Flüssigkeitsmengen sind folgende:

| Leitung | 10 | 15 | 22 | 16 | 17 | 18 |
|---|---|---|---|---|---|---|
| Menge (kg/h) | 200 | 14200 | 280 | 66 | 5 | 65 |

Das aus der Sprühzone (9) kommende, zur Waschzone (14) strömende Rauchgas hat eine Temperatur von 58°C und ist zu 92 % mit Wasserdampf gesättigt. Beim Durchströmen des Bodens (20) liegt die Temperatur des Rauchgases bei 56°C und die Wasserdampf-Sättigung bei 98 %. Die Füllkörperschicht (23) wurde weggelassen. Der Verteiler (22a) ist eine Hochdruckdüse, welche die Waschflüssigkeit nebelartig fein versprüht. Es wird dadurch im Rauchgas eine vollständige Sättigung mit Wasserdampf und lokal auch eine leichte Übersättigung erzielt, wodurch ein Wachsen der Aerosolteilchen durch Wasseraufnahme erreicht wird. Bei der Schicht (25) handelt es sich um eine Gestrickpackung aus Kunststoff.

Der Gehalt an Verunreinigungen im Rauchgas - in mg/Nm³ - an verschiedenen Stellen des Waschturms ist in der folgenden Tabelle angegeben:

| | Leitung (5a) | Boden (20) | Austritt (30) |
|---|---|---|---|
| Staub | 180 | 40 | 5 |
| SO₂ | 3550 | 3540 | 3530 |
| SO₃ | 155 | 100 | 12 |
| NOₓ | 450 | 450 | 450 |
| Chloride | 1,8 | 0,7 | 0 |

Die Inhaltsstoffe des Wassers der Leitung (18) sind nachfolgend in Spalte A und die der Leitung (17) in Spalte B angegeben (in g/l):

| | A | B |
|---|---|---|
| H₂SO₄ | 1,6 | 33 |
| HCl | 0,011 | 0,3 |
| Feststoffe | 0,3 | 14 |
| Schwermetalle | 0,12 | 3,5 |

Bei den Feststoffen handelt es sich vor allem um Kohlenstoff und bei den Schwermetallen vor allem um Vanadium und Nickel.

## Patentansprüche

1. Verfahren zum Entfernen von Staub und Aerosolen aus einem Abgas, welches man in mindestens zwei Waschstufen mit einer vor allem aus Wasser bestehenden Waschflüssigkeit in Kontakt bringt, wobei man in der vorletzten Waschstufe das Abgas mit einer im Kreislauf geführten wäßrigen Salzlösung in Kontakt bringt, welche durch das Abgas herangeführte Stoffe enthält, das Abgas mit Temperaturen im Bereich von 30 bis 150°C in der vorletzten Waschstufe durch eine Waschzone leitet, welcher man im Kreislauf geführte wäßrige Salzlösung in einer Menge von 0,1 bis 10 Liter pro Nm³ Abgas, welches durch die Waschzone strömt, zuführt, und das aus der Waschzone kommende Abgas mit einer Temperatur von 30 bis 80°C, welches zu 90 bis 100 % mit Wasserdampf gesättigt ist und höchstens 50 Gew.-% des Staubgehaltes aufweist, den das Abgas beim Eintritt in die vorletzte Waschstufe hat, in die letzte Waschstufe leitet, wo das Abgas durch eine gasdurchlässige, Turbulenz erzeugende Schicht geführt und wo das Abgas mit Frischwasser und/oder einer Frischwasser enthaltenden Waschflüssigkeit in Kontakt gebracht wird, dadurch gekennzeichnet, daß das Abgas in der letzten Waschstufe aufwärts durch die gasdurchlässige Schicht (25) zu einem Auslaß (30) strömt, wobei das Abgas unterhalb der gasdurchlassigen Schicht mit Frischwasser enthaltender, nebelartig fein zerteilter Waschflüssigkeit besprüht und dabei mit Wasserdampf mindestens gesättigt wird, bevor es in die gasdurchlässige Schicht eintritt, und daß man in der letzten Waschstufe pro Nm³ Abgas 0,05 bis 2 Liter Waschflüssigkeit in das Abgas hinein versprüht.

2. Verfahren nach Anspruch 1, dadurch gekennzeichnet, daß man mindestens einen Teil der Waschflüssigkeit, die man in die letzte Waschstufe hinein versprüht, vor dem Versprühen anwärmt.

3. Verfahren nach Anspruch 1, dadurch gekennzeichnet, daß die Waschzone der zweitletzten Waschstufe eine Füllkorperschicht aufweist, welche mit der wäßrigen Salzlösung berieselt wird und durch welche das Abgas hindurchströmt.

4. Verfahren nach einem der Ansprüche 1 bis 3, dadurch gekennzeichnet, daß man Frischwasser oder Frischwasser enthaltende Waschflüssigkeit in der letzten Waschstufe auf die gasdurchlässige, Turbulenz erzeugende Schicht sprüht.

5. Verfahren nach einem der Ansprüche 1 bis 4, dadurch gekennzeichnet, daß man das Abgas in der letzten Waschstufe zunächst durch eine Füllkörperschicht leitet, bevor man das Abgas durch die gasdurchlässige, Turbulenz erzeugende Schicht führt.

6. Verfahren nach einem der Ansprüche 1 bis 5, dadurch gekennzeichnet, daß man das Abgas durch zwei Waschstufen leitet.

## Claims

1. A method for removing dust and aerosols from an exhaust gas which is brought into contact in at least two washing stages with a washing liquid consisting above all of water, wherein in the penultimate washing stage the exhaust gas is brought into contact with a circulating aqueous salt solution which contains substances brought in by the exhaust gas, the exhaust gas is passed at temperatures in the range from 30 to 150°C in the penultimate washing stage through a washing zone to which circulating aqueous salt solution is supplied at a rate of 0.1 to 10 litres per sm³ exhaust gas, which gas flows through the washing zone, and the exhaust gas emerging from the washing zone at a temperature of 30 to 80°C, which is 90 to 100% saturated with steam and contains at most 50% by weight of the dust content which the exhaust gas had upon entry into the penultimate washing stage, is passed into the final washing stage, where the exhaust gas is passed through a gas-permeable, turbulence-generating layer and where the exhaust gas is brought into contact with fresh water and/or a washing liquid containing fresh water, characterised in that the exhaust gas in the final washing stage flows upwards through the gas-permeable layer (25) to an outlet (30), the exhaust gas being sprayed beneath the gas-permeable layer with washing liquid which contains fresh water and which is sprayed in a fine mist and in so doing is at least saturated with steam before it enters the gas-permeable layer, and that in the final washing stage 0.05 to 2 litres washing liquid per sm³ exhaust gas are sprayed into the exhaust gas.

2. A method according to Claim 1, characterised in that at least part of the washing liquid which is sprayed into the final washing stage is heated before spraying.

3. A method according to Claim 1, characterised in that the washing zone of the penultimate washing stage has a packing layer which is sprinkled with the aqueous salt solution and through which the exhaust gas flows.

4. A method according to one of Claims 1 to 3, characterised in that fresh water or washing liquid containing fresh water is sprayed on to the gas-permeable, turbulence-generating layer in the final washing stage.

5. A method according to one of Claims 1 to 4, characterised in that the exhaust gas in the final washing stage is initially passed through a packing layer before the exhaust gas is passed through the gas-permeable, turbulence-generating layer.

6. A method according to one of Claims 1 to 5, characterised in that the exhaust gas is passed through two washing stages.

## Revendications

1. Procédé pour éliminer de la poussière et des aérosols d'un effluent gazeux, que l'on met en contact, à au moins deux étages de lavage, avec un liquide de lavage constitué surtout d'eau, dans lequel on met en contact, à l'avant-dernier étage de lavage, l'effluent gazeux avec une saumure aqueuse guidée dans le circuit, qui contient des substances amenées par l'effluent gazeux, on fait passer, à l'avant-dernier étage de lavage, l'effluent gazeux ayant des températures dans l'intervalle de 30 à 150°C par une zone de lavage, à laquelle on envoie de la saumure aqueuse, guidée dans le circuit, en une quantité de 0,1 à 10 litres par Nm³ d'effluent gazeux qui s'écoule dans la zone de lavage et on fait passer l'effluent gazeux qui vient de la zone de lavage, qui a une température de 30 à 80°C, qui est saturé de vapeur d'eau de 90 à 100% et qui comporte au plus 50% en poids de la teneur en poussière qu'a l'effluent gazeux à l'entrée à l'avant-dernier étage de lavage, par le dernier étage de lavage, où l'effluent gazeux est guidé dans une couche perméable au gaz, produisant une turbulence et où l'effluent gazeux est mis en contact avec de l'eau fraîche et/ou avec un liquide de lavage contenant une eau fraîche, caractérisé en ce que, au dernier étage de lavage, l'effluent gazeux s'écoule en amont, vers une sortie (30), en passant par la couche (25) perméable au gaz, l'effluent gazeux étant aspergé, au-dessous de la couche perméable au gaz, de liquide de lavage contenant de l'eau fraîche, finement décomposé à la façon d'une brume, et y étant au moins saturé en vapeur d'eau avant d'entrer dans la couche perméable au gaz, et en ce que, au dernier étage de lavage, on pulvérise dans l'effluent gazeux, par Nm³ d'effluent gazeux, 0,05 à 2 litres de liquide de lavage.

2. Procédé suivant la revendication 1, caractérisé en ce que l'on chauffe, avant la pulvérisation, au moins une partie du liquide de lavage que l'on pulvérise dans le dernier étage de lavage.

3. Procédé suivant la revendication 1, caractérisé en ce que la zone de lavage de l'avant-dernier étage de lavage comporte une couche de charge, qui est arrosée de la saumure aqueuse et par laquelle l'effluent gazeux s'écoule.

4. Procédé suivant l'une des revendications 1 à 3, caractérisé en ce que l'on pulvérise de l'eau fraîche ou du liquide de lavage contenant de l'eau fraîche, au dernier étage de lavage, sur la couche perméable au gaz produisant une turbulence.

5. Procédé suivant l'une des revendications 1 à 4, caractérisé en ce que l'on fait passer, au dernier étage de lavage, l'effluent gazeux d'abord par une couche de charge, avant de guider l'effluent gazeux par la couche perméable au gaz produisant une turbulence.

6. Procédé suivant l'une des revendications 1 à 5, caractérisé en ce que l'on fait passer l'effluent gazeux par deux étages de lavage.
